# EUROPÄISCHE PATENTSCHRIFT

(11) **EP 3 024 757 B1**
(45) Veröffentlichungstag und Bekanntmachung des Hinweises auf die Patenterteilung: **07.12.2016**
(21) Anmeldenummer: 14742177.0
(22) Anmeldetag: 15.07.2014
(51) Int. Cl.: B65G 1/04

(54) **FÖRDERFAHRZEUG SOWIE BASISGESTELL UND BAUKASTENSYSTEM FÜR FÖRDERFAHRZEUG**
CONVEYOR VEHICLE AND BASE FRAME AND MODULAR SYSTEM FOR CONVEYOR VEHICLE
VÉHICULE DE TRANSPORT AINSI QUE CHÂSSIS DE BASE ET SYSTÈME DE CONSTRUCTION MODULAIRE POUR VÉHICULE DE TRANSPORT

(30) Priorität: 23.07.2013 DE 102013107873
(43) Veröffentlichungstag der Anmeldung: 01.06.2016
(73) Patentinhaber: SSI Schäfer Peem GmbH, 8051 Graz (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2014/065149
(87) Internationale Veröffentlichungsnummer: WO 2015/010959

(56) Entgegenhaltungen:
- WO-A1-2013/013252

## Beschreibung

Die vorliegende Erfindung betrifft ein Basisgestell, das universell für verschiedene, modular aufgebaute, Förderfahrzeuge, insbesondere für Shuttle, einsetzbar ist, wobei die Förderfahrzeuge horizontal entlang einer Fahrtrichtung in einem Lager- und Kommissioniersystem verfahrbar sind, wobei das Basisgestell einen tragenden Rahmen und einen Aufbau aufweist, der mit dem Rahmen verbunden ist. Ein derartiges Basisgestell ist aus der gattungsgemäßen WO 2013/013252 A1 bekannt.

Des Weiteren betrifft die Erfindung ein Baukastensystem mit einem entsprechenden universellen Basisgestell und komponentenspezifischen Adaptern. Außerdem betrifft die Erfindung ein Förderfahrzeug mit einem entsprechenden Basisgestell.

In der Intralogistik werden verschiedene Transportsysteme zur Überwindung von Entfernungen eingesetzt. Die Transportsysteme befördern Transportgüter von einer Quelle zu einem Ziel. Die Transportsysteme umfassen Fördersysteme und Fahrzeugsysteme. In einem Fördersystem wird das Transportgut, mit oder ohne Ladungsträger, als Fördergut auf einem angetriebenen Transportnetz von einer Aufgabestation zu einer Abgabestation befördert. In einem Fahrzeugsystem wird das Transportgut mit einem eigenen Antrieb über ein antriebsloses Transportnetz von einer Beladestation zu einer Entladestation befördert.

Ein Trend in der Intralogistik geht dahin, verstärkt Förderfahrzeuge, und insbesondere sog. Shuttle, für einen innerbetrieblichen Materialfluss einzusetzen. Es gibt autonom verfahrbare Shuttle, die sich entlang frei wählbaren Fahrwegen auch außerhalb eines Regals bewegen können, und es gibt geführte Shuttle, die bspw. innerhalb eines Regals auf Fahrschienen geführt verfahrbar sind, die an den Regalen angebracht sind. Somit besteht ein großes Bedürfnis nach kostengünstigen Shuttle, da immer mehr Shuttle innerhalb von Lager- und Kommissioniersystemen zum Einsatz kommen.

Im Gebrauchsmuster DE 20 2009 016 914 U1 wird ein selbstfahrendes geführtes Shuttle offenbart.

In der internationalen Patentanmeldung WO 2013/013252 A1 wird ein gattungsgemäßes selbstfahrend geführtes Shuttle offenbart, das einen Grundrahmen aufweist. Der Grundrahmen weist Rahmenteile auf. Die Rahmenteile sind einfach und kostengünstig hergestellt, weil sie aus Blech sind. Bei den Rahmenteilen des Grundrahmens handelt es sich um Bauteile, die aus Blech gebildet sind und spanlos zugeschnitten werden. Alternativ können die Teile aus spanlos umgeformten Umformteilen gebildet sein. Die Rahmenteile werden stoffschlüssig zusammengefügt (z.B. geschweißt). Die Mehrzahl der Rahmenteile wird aus dünnem Blech spanlos in Form von einfachen, zumeist ebenflächigen Bauteilen und/oder aus Blech gebildeten Umformteilen gebildet, so dass niedrige Herstellungskosten erreichbar sind. Dies ist insbesondere für eine einfache Serienproduktion (auch in Kleinserien) von Vorteil. Die Blechrahmenteile werden zugeschnitten, z.B. mittels Laserschneidens oder Stanzens. Die Umformteile können gebogen, gepresst oder geprägt werden. Auf diese Weise wird ein einfaches und kostengünstig zusammensetzbares Baukastensystem geschaffen. Derartige Blechkonstruktionen erfordern sehr geringe Investitionen in Werkzeug- und in spezielle Fertigungseinrichtungen. Sie sind damit ideal für kleine Stückzahlen und weisen eine hohe Flexibilität sowie eine große Variantenvielfalt auf.

Eine weitergehende, komplexere Bauteil- bzw. Komponentenintegration, und insbesondere Funktionsintegration, findet nicht statt. Die Rahmenbauteile werden größtenteils manuell zusammengefügt (z.B. geschweißt und/oder geschraubt). Funktionsbauteile (z.B. Motor und Steuerplatine) werden mittels Schraubverbindungen an den Rahmenbauteilen befestigt. Eine Montage der Funktionsbauteile benötigt relativ viel Zeit. Der Einsatz von Spritzgusstechniken ist nicht für Kleinserien rentabel.

Bei den bekannten Shuttle sind alle tragenden funktionalen Elemente aus Metall gefertigt, die mit Kunststoffteilen verkleidet werden.

Es ist daher eine Aufgabe der vorliegenden Erfindung, ein Basisgestell für ein Förderfahrzeug vorzusehen, das weiter vereinfacht ist, mehr Funktionen integriert, Materialkosten spart und Fertigungskosten reduziert, wobei eine hohe Funktions- und Fertigungsqualität beibehalten bleibt.

Ferner ist es eine Aufgabe der vorliegenden Erfindung, ein entsprechendes Baukastensystem sowie ein entsprechendes Förderfahrzeug vorzusehen.

Diese Aufgabe wird gelöst durch ein Basisgestell der eingangs erwähnten Art, wobei zumindest der Aufbau ausschließlich aus Kunststoff hergestellt ist und wobei der Aufbau eine Vielzahl von komponentenspezifischen Aufnahmen aufweist, die einstückig mit dem Aufbau ausgebildet sind und die eingerichtet sind, mindestens eine der folgenden Funktionskomponenten des jeweiligen Förderfahrzeugs formschlüssig in einer federnden Klemmverbindung zu halten: ein Lager; eine Antriebseinheit; einen Sensor; einen Aktuator; ein Lastaufnahmemittel; eine Kommunikationseinheit; eine Verkabelung und eine elektrische Steuereinheit; wobei jede der Funktionskomponenten entlang einer komponentenspezifischen Montagerichtung in oder auf die jeweilige komponentenspezifische Aufnahme formschlüssig steckbar ist. Vorzugsweise ist jede der Funktionskomponenten in einer komponentenspezifischen Demontagerichtung, die entgegengesetzt zur Montagerichtung orientiert ist, kraftschlüssig durch die jeweilige komponentenspezifische federnde Aufnahme fixierbar.

Der Aufbau des Basisgestells ist eine Kunststoffkonstruktion, die eine komplexe Bauteil- bzw. Komponentenintegration und Funktionsintegration ermöglicht. Der Aufbau enthält komplette (formschlüssige) Aufnahmen für die Funktionskomponenten, die komplexe Bauteilgruppen bilden können. Die Aufnahmen für derartige komplexe Bauteilgruppen sind in ein einziges Bauteil (nämlich den Aufbau) integriert. So trägt bspw. die Motoraufnahme den Motor, fixiert den Motor in der richtigen Position und dient gleichzeitig als Drehmomentstütze. In einer konventionellen Konstruktion sind hierfür mehrere Bauteile nötig, die wiederum am (Blech-)Rahmen oder einer anderen Hilfskonstruktion mit Werkzeug und zusätzlichen Befestigungselementen (z.B. Haltewinkel, etc.) befestigt werden müssen.

Das Basisgestell ersetzt eine Vielzahl von einzelnen konventionellen Bauteilen und Baugruppen durch Kunststoffelemente. Mehrere Funktionen sind in einer einzigen Konstruktion integriert (z.B. Zahnradaufnahme und Spanner, Gehäuse und Lagersitz, etc.). Es werden Materialkosten eingespart, weil viele Einzelteile (z.B. Befestigungswinkel, Schrauben, Federn, Lageraufnahmen, etc.) wegfallen.

Die Fertigungskosten reduzieren sich, weil viele Montageschritte wegfallen. Die Funktionskomponenten werden ohne Werkzeug einfach in die entsprechenden komponentenspezifischen Aufnahmen gesteckt und sitzen dort form- und kraftschlüssig verliersicher in einer Klemmverbindung. Auf diese Weise lässt sich eine hohe Qualität durch weniger Arbeitsschritte, und somit weniger Fehlermöglichkeiten, sowie durch die komponentenspezifischen Aufnahmen vorgegebene, verwechslungssichere Montagepositionen und Komponententoleranzen erzielen.

Gemäß einer bevorzugten Ausgestaltung sind der Rahmen und der Aufbau einstückig miteinander ausgebildet.

Die einstückige Ausbildung des Rahmens und des Aufbaus vereinfacht die Montage des Förderfahrzeugs. Man hat nur noch ein Element, an welchem alle Funktionskomponenten angebracht werden. Es wird lediglich ein einziges Spritzguss-werkzeug benötigt. Dennoch ist das daraus resultierende Basisgestell für eine Vielzahl unterschiedlicher Förderfahrzeugtypen einsetzbar.

Vorzugsweise ist der Aufbau spritzgegossen und/oder laminiert.

Die Funktionskomponenten sind insbesondere werkzeuglos montierbar.

Dies verkürzt die Montagezeit. Aufgrund des komponentenspezifischen Formschlusses können die Funktionskomponenten nur noch in den dafür vorgesehenen Aufnahmen montiert werden. Dies erhöht die Fertigungsqualität und reduziert Einbaufehler.

Außerdem ist es von Vorteil, wenn jede der Aufnahmen durch eine Ausnehmung im Aufbau und/oder eine aus dem Aufbau vorstehende Nase implementiert ist.

Die Ausnehmungen und Nasen sind einstückig mit dem Aufbau ausgebildet. Die Ausnehmungen und Nasen können in einem Schritt mit dem Aufbau hergestellt werden. Die Ausnehmungen und Nasen sind integrierte Bestandteile des Aufbaus. Bei der Montage der Förderfahrzeuge reduziert sich die Anzahl der benötigten Bauteile, weil sie bereits in den Aufbau integriert sind.

Bei einer weiteren bevorzugten Ausgestaltung sind die komponentenspezifischen Aufnahmen an aufeinander abgestimmten Orten des Aufbaus angeordnet.

Dadurch ist es möglich, zusammenwirkende Komponenten zu bilden. Aufwändige Justagearbeiten beim Montieren der Komponenten entfallen.

Vorzugsweise weist das Basisgestell ferner eine Aufnahme für mindestens eine der folgenden Funktionsgruppen auf: eine Laufradachse; ein Gehäuse; zusätzliche Verstärkungsrippen; ein Hubwerk; ein Energiespeicher; Mast oder ein Mastfuß.

Das Basisgestell ist universell für viele verschiedene Typen von Förderfahrzeugen einsetzbar. Das Basisgestell kann für Einebenenbediengeräte verwendet werden. Das Basisgestell kann für Mehrebenenbediengeräte eingesetzt werden. Das Basisgestell kann für autonom verfahrbare Shuttles eingesetzt werden. Das Basisgestell kann je nach Beanspruchung des Förderfahrzeugs in Vorzugsrichtungen verstärkt werden, z.B. entlang der Fahrtrichtung oder quer dazu.

Insbesondere ist der Kunststoff ein glasfaserverstärkter oder karbonfaserverstärkter Verbundstoff mit einer Kunststoffmatrix.

Bei einer vorteilhaften Ausgestaltung weisen der Rahmen und der Aufbau jeweils eine rechteckig umlaufende, innen offene Grundfläche auf.

Diese Ausgestaltung ermöglicht die einfache Aufnahme eines Lastaufnahmemittels. Das Lastaufnahmemittel kann z.B. entlang der Höhenrichtung nach oben und nach unten agieren.

Ferner ist es von Vorteil, wenn der Aufbau in mehrere Abschnitte unterteilt ist, wobei ein erster Abschnitt zur Aufnahme des Lastaufnahmemittels eingerichtet ist und wobei ein oder mehrere zweite Abschnitte zur Aufnahme der restlichen Funktionskomponenten eingerichtet ist bzw. sind.

Die Unterteilung des Basisgestells in Abschnitte ermöglicht eine ortsgenaue Verstärkung des Aufbaus. Üblicherweise ruft das Lastaufnahmemittel die größten Belastungen hervor, so dass in diesem Bereich eine Verstärkung des Aufbaus bzw. Rahmens sinnvoll ist.

Generell ist es sinnvoll, den Kunststoff im Bereich der Aufnahmen zu verstärken, weil dort die größten Belastungen herrschen.

Die oben genannte Aufgabe wird ferner durch ein Baukastensystem mit einem universellen Basisgestell gemäß der Erfindung und mit mindestens einem komponentenspezifischen Adapter gelöst, wobei jeder der Adapter geometrisch an eine der komponentenspezifischen Aufnahmen sowie an die jeweilige Funktionskomponente formschlüssig angepasst ist.

Die oben genannte Aufgabe wird auch durch ein Förderfahrzeug, insbesondere ein Shuttle, mit einem Basisgestell gemäß der Erfindung gelöst, das ferner aufweist: mehrere Laufräder und Laufradlager; eine Antriebseinheit; mindestens einen Sensor; eine Verkabelung und eine elektrische Steuereinheit.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: ein Blockdiagramm eines Lager- und Kommissioniersystems,
- Figur 2: eine perspektivische Ansicht eines vereinfacht dargestellten Förderfahrzeugs;
- Figur 3: ein Blockdiagramm eines Shuttles;
- Figur 4: eine perspektivische Teilansicht eines Aufbau inklusive entsprechender Funktionskomponenten;
- Figur 5: ein Blockdiagramm eines Baukastensystems; und
- Figur 6: eine perspektivische Ansicht einer Spannvorrichtung der Figur 4.

Die Erfindung kommt im Gebiet der Intralogistik zum Einsatz und betrifft einen Materialfluss in einem Lager- und Kommissioniersystem 10.

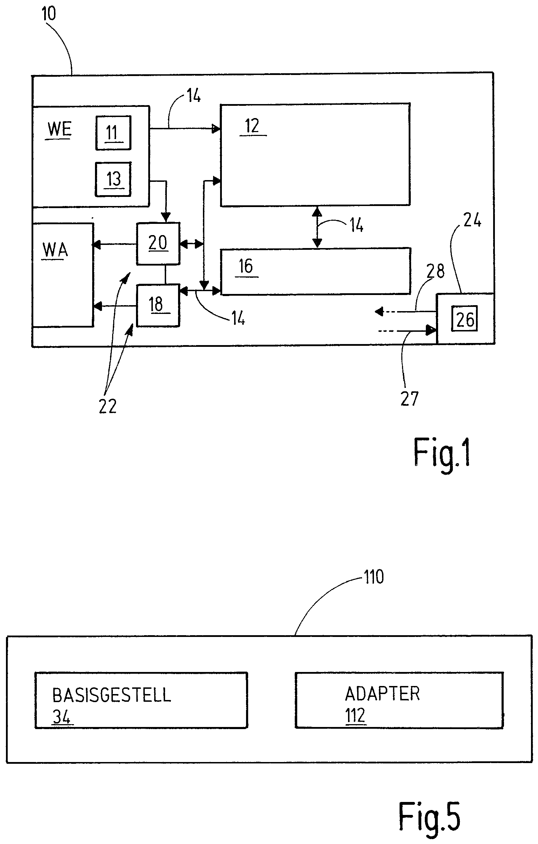

Das exemplarische Lager- und Kommissioniersystem 10 ist in Fig. 1 gezeigt. Das System 10 weist einen Wareneingang WE und einen Warenausgang WA sowie ein Lager 12 auf. Im Bereich des Wareneingangs WE können ferner sog. "Teach-In"-Plätze 11 und Vereinzelungsstationen 13 vorgesehen sein. An einem "Teach-In"-Platz 11 kann eine Abmessung (z.B. Höhe, Breite und Tiefe) eines Stückguts oder Gebindes vermessen werden, um einer Kommissioniersteuerung bzw. Steuereinheit 24 Daten zu liefern, die bei einer Handhabung des entsprechenden Stückguts (z.B. Einlagern, Lagervolumen, Auslagern, Packen, Kommissionieren, etc.) benötigt werden.

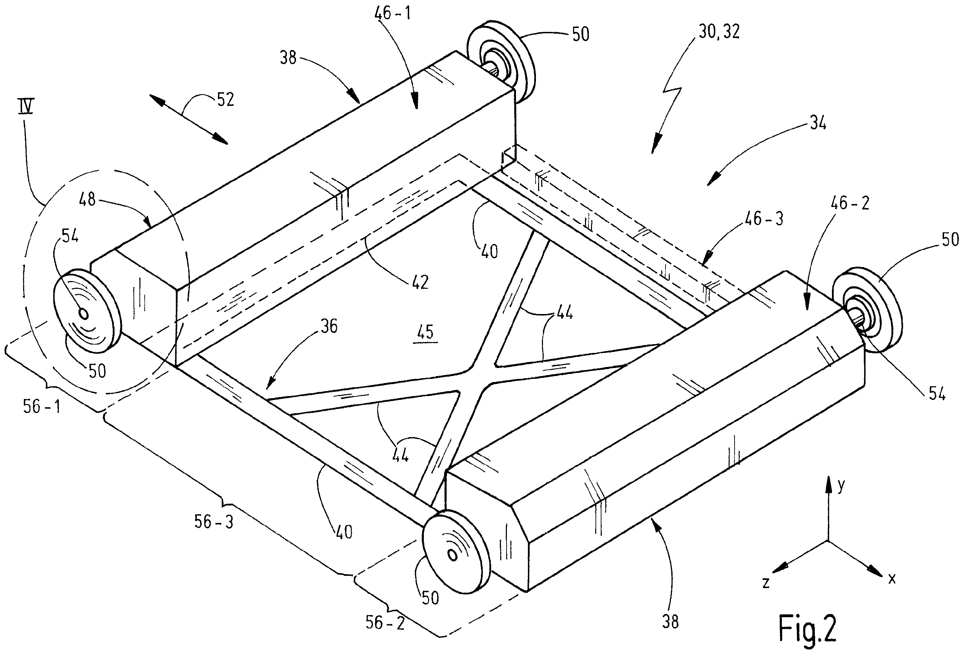

Grundsätzlich können alle Elemente des Lager- und Kommissioniersystems 10, die an einem Materialfluss beteiligt sind, über bidirektional betreibbare stationäre Fördertechniken bzw. Förderer 14 miteinander verbunden sein. Alternativ und ergänzend können autonom verfahrbare Förderfahrzeuge 30 eingesetzt werden, auf die unten unter Bezugnahme auf Fig. 2 noch näher eingegangen werden wird. Die Förderer 14 sind in Fig. 1 durch Pfeile angedeutet. Über die Förderer 14 kann das Lager 12 z.B. mit einem Sorter 16 und anderen Arbeitsstationen 22, wie z.B. einem Kommissionierarbeitsplatz 18 oder einem Pack-Arbeitsplatz bzw. einer Packstation 20 verbunden sein. Die Steuerung des Materialflusses wird von der Steuereinheit 24 übernommen, die eine Recheneinheit 26 aufweist. Die Steuereinheit 24 kann in Form eines zentralen Großrechners oder in Form dezentral verteilter Computer realisiert sein. Die Steuereinheit 24 wird mit einer Software betrieben, die die Kommissioniersteuerung übernimmt. Zur Kommissioniersteuerung gehören bspw. eine Lagerverwaltung, eine Auftragsverwaltung, Kommissionierleitstrategien (wie z.B. Pick-by-Voice, Pick-by-Light, Pick-by-Vision, oder Ähnliches), ein Warenwirtschaftssystem und/oder die Lagerverwaltung. Die Lagerverwaltung kann wiederum einen Materialfluss sowie eine Lagerplatzverwaltung regeln. Die eben beschriebenen Funktionen werden größtenteils in Form von Soft- und/oder Hardware implementiert. Diese können auch über einen (oder mehrere) Kommunikationsbus(se) miteinander kommunizieren. Die Auftragsverwaltung und -abwicklung sorgt dafür, dass eingehende Kommissionieraufträge zur Bearbeitung an die Arbeitsstationen 22 verteilt werden und entsprechende Fahraufträge generiert und verteilt werden. Dabei spielen Faktoren wie Auslastung, Stückgutsortiment, Wegoptimierung und Ähnliches eine Rolle.

Eine Koordination der Abarbeitung von (Kommissionier-)Aufträgen übernimmt ein Auftragsabwicklungssystem, das meist in die Kommissioniersteuerung 24 integriert ist.

Die Steuereinheit 24 kommuniziert relevante Informationen über feste Leitungen und/oder drahtlos in beiden Richtungen. In der Fig. 1 sind exemplarisch Sensorsignale 27 als Eingangssignale für die Steuereinheit 24 gezeigt. Ausgangssignale sind exemplarisch in Form von Fahrsignalen 28 gezeigt.

Fig. 2 zeigt eine perspektivische Ansicht eines Förderfahrzeugs 30, das exemplarisch in Form eines (Kanal-)Shuttles 32 implementiert ist. Es versteht sich, dass die vorliegende Erfindung auf jeden anderen Förderfahrzeugtyp anwendbar ist. Sie kann z.B. auch auf fahrerlose Transportsysteme oder autonom innerhalb des Lager- und Kommissioniersystems verfahrbare Shuttle 32 angewendet werden.

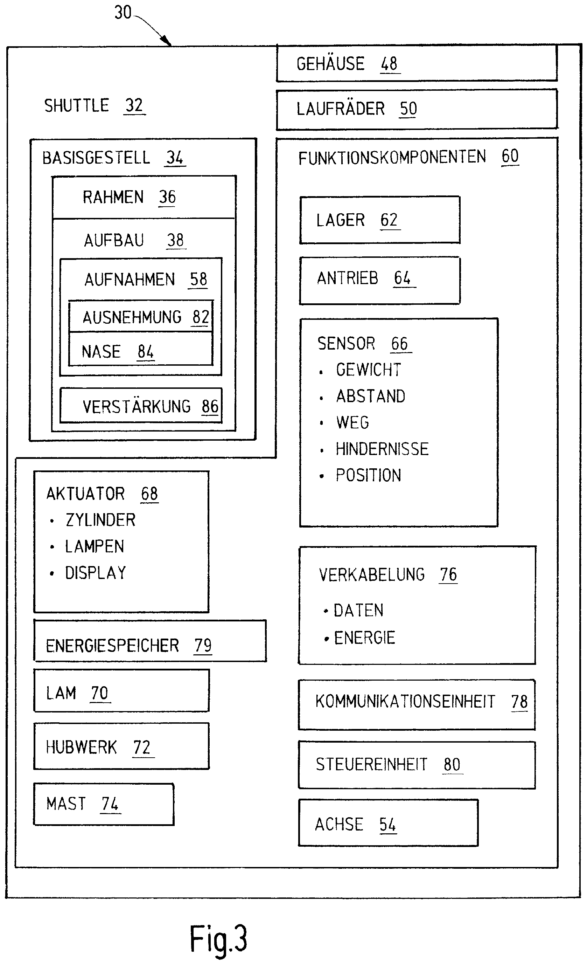

Das Förderfahrzeug 30 bzw. Shuttle 32 weist ein Basisgestell 34 auf, das einen Rahmen 36 und einen Aufbau 38 umfasst. Das Basisgestell 34 ist in seiner Gesamtheit das tragende Teil des Förderfahrzeugs 30. Am Basisgestell 34 werden Funktionskomponenten 60 befestigt, wie z.B. Radaufhängungen, Antriebselemente (Getriebe und Motor), die Karosserie bzw. das Gehäuse, etc. Auf die Funktionskomponenten 60 wird unter Bezugnahme auf Fig. 3 noch näher eingegangen werden.

Der Rahmen 36 kann in unterschiedlichen Bauweisen (z.B. Leiterrahmen, Gitterrahmen, Zentralrohrrahmen, Plattformrahmen, etc.) ausgebildet sein. Der Rahmen 36 wird üblicherweise aus Stahl hergestellt. Es können aber auch Legierungen (Aluminiumlegierung), Kunststoff oder Verbundwerkstoffe eingesetzt werden.

Der (Fahrzeug-)Aufbau 38 stellt eine Trag- und Befestigungskonstruktion dar, an dem die Funktionskomponenten 60 befestigbar sind. In der Fig. 2 ist der Aufbau 48 zweiteilig ausgebildet und auf den Rahmen 36 montiert. Man spricht in diesem Zusammenhang von einer getrennten Bauweise. Der Aufbau 38 ist aus Kunststoff, vorzugsweise spritzgegossen, hergestellt. Es versteht sich, dass auch der Rahmen 36, vorzugsweise verstärkt, aus Kunststoff herstellbar ist. Der Rahmen 36 und der Aufbau 38 können einstückig aus Kunststoff hergestellt werden. Man spricht dann von einer integrierten Bauweise.

Der Aufbau 38 ist aus Kunststoff gefertigt, weil der Kunststoff ein geringes spezifisches Gewicht hat und damit erhebliche Gewichtseinsparungen verbunden sind. Der Kunststoff ist korrosionsbeständig. Der Kunststoff ermöglicht eine weitreichende Gestaltungsfreiheit bei der Formgebung. Der Kunststoff stoßunempfindlich. Eine Nachbearbeitung des Aufbaus nach dem Ende des Herstellungsprozesses ist nicht erforderlich.

Es versteht sich, dass ferner Verbundwerkstoffe mit einer Kunststoff-matrix einsetzbar sind. Ein Verbundwerkstoff ist ein Werkstoff aus zwei oder mehr verbundenen Materialien, der andere Werkstoffeigenschaften besitzt als seine einzelnen Komponenten. Die Komponenten des Verbundwerkstoffs können dabei selbst wieder Verbundwerkstoffe sein. Bei Teilchen- und Faserverbundwerkstoffen sind Teilchen oder Fasern in die andere Komponente des Verbundwerkstoffes, der sog. Matrix, eingebettet. Glaserverstärkte Kunststoffe sowie kohlenstofffaserverstärkte Kunststoffe können zum Einsatz kommen. Ein glasfaserverstärkter Kunststoff (GFK) ist ein Faserkunststoffverbund aus einem Kunststoff und Glasfasern. Als Basis kommen duroplastische (z.B. Polyesterharz oder Epoxidharz) als auch thermoplastische (z.B. Polyamid) Kunststoffe in Frage. GFK ist kostengünstig und mechanisch hoch beanspruchbar. GFK hat einen relativ niedrigen Elastizitätsmodul und zeigt auch in aggressiven Umgebungen ein ausgezeichnetes Korrosionsverhalten. Kohlenstofffaserverstärkte Kunststoffe (CFK) bezeichnen einer Faserkunststoff-Verbundwerkstoff, bei dem Kohlenstofffasern, meist in mehreren Lagen, als Verstärkung in einer Kunststoff-Matrix eingebettet sind. Die Matrix besteht meist aus Duromeren, z.B. Epoxidharz oder aus Thermoplasten.

Zurückkehrend zur Fig. 2 sind Längsstreben 40, Querstreben 42 sowie optionale Kreuzstreben 44 gezeigt. Die Streben 40, 42 und 44 bilden den, vorzugsweise in sich geschlossenen, Rahmen 36 und spannen im Wesentlichen eine Grundfläche 45 des Shuttles 32 auf. Die Längsstreben 40 erstrecken sich in einer Längsrichtung X. Die Querstreben 42 erstrecken sich in einer Querrichtung Z. Die Längsstreben 40 und die Querstreben 42 umgeben die hier exemplarisch rechteckige Grundfläche 45. Zur Erhöhung einer Versteifung können die Kreuzstreben 44 zwischen den Streben 40 und/oder 42 angeordnet sein.

Der Aufbau 38 der Fig. 2 ist exemplarisch zweiteilig ausgebildet und weist somit zwei Aufbauelemente 46-1 und 46-2 auf. Die Aufbauelemente 46-1 und 46-2 sind im Bereich der Querstreben 42 angeordnet. Die Aufbauelemente 46-1 und 46-2 sind mit dem Rahmen 36 verbunden. Die Verbindung kann formschlüssig, kraftschlüssig (z.B. durch Verschraubung) und/oder stoffschlüssig (einstückige Ausbildung des Rahmens 36 mit dem Aufbau 48) sein. Es versteht sich, dass der Aufbau 38 einstückig oder mehrteilig ausgebildet sein kann. Um die Steifigkeit des Aufbaus 38 zu erhöhen, kann z.B. ein weiteres Aufbauelement 46-3 vorgesehen sein, das sich in der Längsrichtung X zwischen den Aufbauelementen 46-1 und 46-2 erstreckt, die sich im Beispiel der Fig. 2 im Wesentlichen in der Querrichtung Z erstrecken. In diesem Fall weist der Aufbau 38 eine U-förmige Grundform auf. Besonders bevorzugt ist jedoch eine rechteckige Grundform, weil diese besonders verwindungssteif ist. Eine rechteckige Grundform kann z.B. erhalten werden, indem man das rechte Aufbauelement 46-3 zusätzlich auch auf der linken Seite anordnet. Auf diese Weise erhält man einen in Umfangsrichtung geschlossenen, innen offenen Aufbau 38 (nicht dargestellt in Fig. 2).

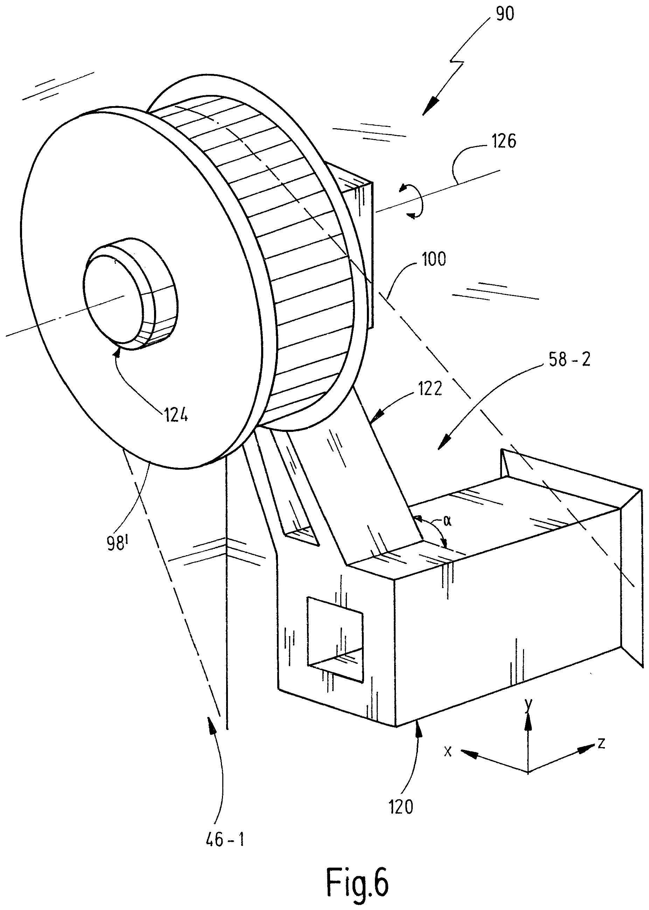

Das Shuttle 32 der Fig. 2 ist im Bereich der Aufbauelemente 46-1 und 46-2 mit einem Gehäuse 48 versehen, das die Aufbauelemente 46 abdeckt. Das Gehäuse 48 ist optional. Ferner sind seitlich überstehende Laufräder 50 vorgesehen, die auf einer jeweiligen Achse 54 montiert sind. Die Achse 54 kann durchgehend ausgebildet sein. Alternativ kann eine Einzelradaufhängung gewählt werden. Das Shuttle 32 ist mit den Laufrädern 50 auf hier nicht dargestellten Laufschienen, z.B. innerhalb einer Regalgasse in einer ausgewählten Regalebene (siehe z.B. Fig. 6 der DE 201 12 328 U1) verfahrbar.

Das Basisgestell 34 kann in der Längsrichtung X, der Querrichtung Z und/oder der Höhenrichtung Y in mehrere Abschnitte 56 aufgeteilt sein. In der Fig. 2 ist das Basisgestell 34 in der Längsrichtung X aufgeteilt in drei Abschnitte 56-1 bis 56-3. Das Shuttle 32 ist auch in der Längsrichtung X hin- und herbewegbar (Fahrtrichtung), wie es durch einen Pfeil 52 angedeutet ist. In den ersten und zweiten Abschnitten 56-1 und 56-2 sind die Aufbauelemente 46-1 und 46-2 angeordnet. Die Abschnitte 56-1 und 56-2 stellen äußere Endbereiche des Shuttles 32 in der Fahrtrichtung 52 dar. Der dritte, mittlere Abschnitt 56-3 ist für ein Lastaufnahmemittel 70 reserviert, auf das unter Bezugnahme auf Fig. 3 noch näher eingegangen wird und das in der Fig. 2 nicht dargestellt ist. Das Lastaufnahmemittel (LAM) 70 dient im vorliegenden Fall zur Ein-/Auslagerung von Fördergütern in der Querrichtung Z. Die Aufbauelemente 46-1 und 46-2 (und ggf. auch das Aufbauelement 46-3) sind so angeordnet und ausgebildet, dass sie das LAM 70 formschlüssig aufnehmen und kraftschlüssig halten (Klemmverbindung) können, wie es nachfolgend noch näher erläutert werden wird.

Unter Bezugnahme auf Fig. 3 wird nachfolgend eine Struktur der Förderfahrzeuge 30 exemplarisch am Beispiel des Shuttles 32 erläutert. Fig. 3 zeigt ein Blockdiagramm der Struktur des Shuttles 32.

Das Shuttle 32 weist das Basisgestell 34, das Gehäuse 48, die Laufräder 50 sowie ein oder mehrere der Funktionskomponenten 60 auf.

Das Basisgestell 34 weist den Rahmen 36 und den Aufbau 38 auf. Der Aufbau 38 umfasst ein oder mehrere komponentenspezifische Aufnahmen 58. Jede der Aufnahmen 58 ist eingerichtet, eine der Funktionskomponenten 60 formschlüssig in einem Klemmsitz zu halten. Vorzugsweise ist jede der Aufnahmen 58 einstückig mit dem jeweiligen Aufbau 38 ausgebildet. Jede der Aufnahmen 58 ist eingerichtet, eine der Funktionskomponenten 60 mittels elastischer Verformbarkeit des Aufbaus 38 in einer Montageposition zu halten, wobei eine Demontage in einer entgegengesetzten Demontagerichtung möglich ist, wie es nachfolgend noch näher erläutert werden wird.

Die Funktionskomponenten 60 weisen mindestens eines der nachfolgend genannten Elemente auf: ein Lager bzw. eine Lagereinrichtung (z.B. Laufradlager) 62; einen Antrieb bzw. eine Antriebseinheit 64; mindestens einen Sensor 66; mindestens einen Aktuator 68; ein Lastaufnahmemittel (LAM) 70; ein Hubwerk 72; einen Mast 74; eine Verkabelung 76; eine Kommunikationseinheit 78; eine Achse 54; einen Energiespeicher 79 und/oder eine Steuereinheit 80.

Für jede der oben genannten Funktionskomponenten 60 ist eine eigene komponentenspezifische Aufnahme 58 im Aufbau 38 vorgesehen, die die jeweilige Komponente 60 in einer Montagerichtung formschlüssig aufnimmt. Die Aufnahmen 58 können in Form von einer oder mehreren Ausnehmungen 82 und/oder einer oder mehreren Nasen 84 implementiert sein. Optional kann der Aufbau 38 zusätzliche Verstärkungen (z.B. Verstärkungsrippen) 68 aufweisen, die funktional den Kreuzstreben 44 (vgl. Fig. 2) ähneln.

Die Sensoren 66 können z.B. ein Gewicht, einen Abstand, einen Weg, Hindernisse, eine Position oder dergleichen bestimmen. Die Sensoren 66 stehen datentechnisch mit der Steuereinheit 80 in Verbindung.

Die Aktuatoren 88 können bspw. in Form von (Stell-)Zylindern, Lampen, Displays oder Ähnlichem implementiert sein. Auch die Aktuatoren 88 stehen datentechnisch mit der Steuereinheit 80 in Verbindung.

Die Steuereinheit 80 steht über die Verkabelung 76 datentechnisch ferner mit dem Antrieb 64, dem Lastaufnahmemittel 70, dem Hubwerk 72 und/oder der Kommunikationseinheit 78 in Verbindung. Über die Kommunikationseinheit 78 kann die Steuereinheit 80 mit der Steuereinheit 24 (vgl. Fig. 1) kommunizieren.

Die Laufräder 50 sind über die Achsen 54 in den Lagern 62 gelagert und werden über den Antrieb 64 angetrieben. Der Antrieb 64 bekommt die dazu erforderliche Energie über die Verkabelung 76 vom Energiespeicher 79 geliefert und wird über die Steuereinheit 80 geregelt.

Wenn das LAM 70 höhenverstellbar ist, ist das LAM 70 mit dem Hubwerk 72 verbunden, das wiederum seine Befehle von der Steuereinheit 80 erhält. Das LAM 70 ist in diesem Fall entlang des Masts 74 in der Höhenrichtung Y verfahrbar.

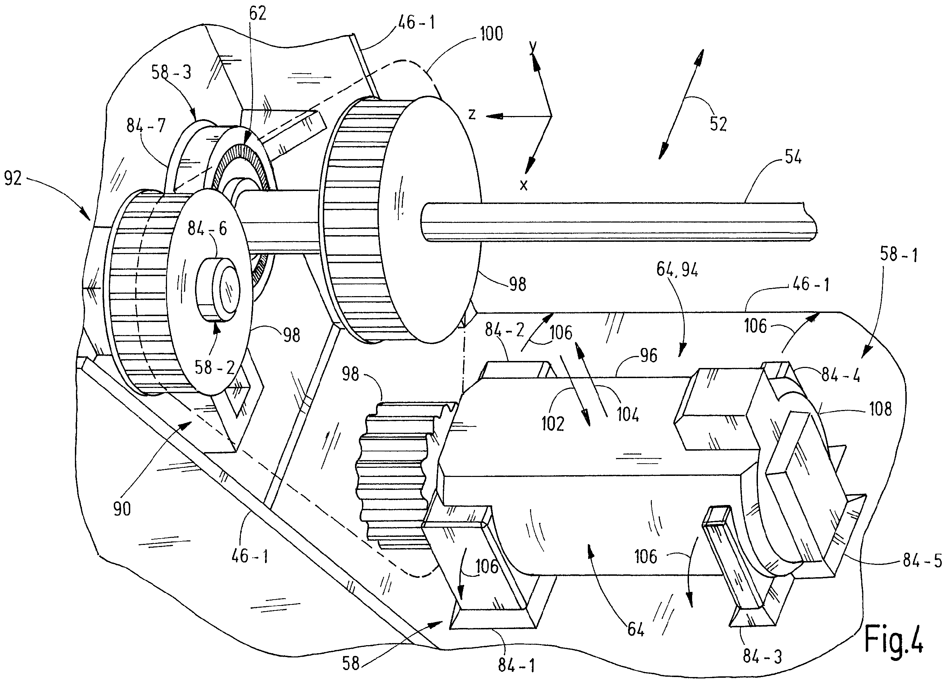

Unter Bezugnahme auf Fig. 4, die eine perspektivische Ansicht eines Bereichs des Aufbauelements 46-1 zeigt, das in der Fig. 2 mit einer mit "IV" bezeichneten Strichlinie umrandet ist, wird die formschlüssige Integration der Funktionskomponenten 60 in den Aufbau 38 am Beispiel des Antriebs 64, eines der Laufradlager 62 sowie einer Spanneinrichtung 90 und einer Umlenkeinrichtung 92 exemplarisch beschrieben. Die Fig. 4 zeigt das Aufbauelement 46-1 der Fig. 2 lediglich teilweise, wobei das Gehäuse 48 weggelassen ist und man von schräg oben in ein Inneres des Shuttles 32 blickt.

Im unteren Bereich der Fig. 4 ist der Antrieb 64 in Form eines E-Motors 94 gezeigt. Der E-Motor 94 hat z.B. ein zylindrisches Gehäuse 96, welches sich im eingebauten Zustand im Wesentlichen entlang der Querrichtung Z erstreckt. Der E-Motor 94 ist mit einem Zahnrad 98 verbunden, welches sich um eine hier nicht näher bezeichnete (Motor-)Achse dreht, die parallel zur Querrichtung Z orientiert ist. Das Zahnrad 68 kämmt mit einem Zugmittel (z.B. Zahnriemen) 100, der in Fig. 4 durch eine Strichlinie angedeutet ist. Das Zugmittel 100 verbindet das Zahnrad 98 des E-Motors 94 mit einem Zahnrad 98 der Umlenkeinrichtung 92 sowie mit einem Zahnrad 98, das drehfest auf der Achse 54 sitzt. Das Zugmittel 100 läuft endlos in der Ebene XY um. Die Spanneinrichtung 90, die später noch genauer eingegangen werden wird, sorgt dafür, dass das Zugmittel 100 stets in seiner Längsrichtung unter Spannung steht und ein schlupffreier Antrieb der hier nicht dargestellten Laufräder 50 gewährleistet ist.

Der E-Motor 94 wird in einer Montagerichtung 102 (negative Y-Richtung) in die motorspezifische Aufnahme 58-1 gesteckt bzw. gedrückt und in einer Demontagerichtung 104 (positive Y-Richtung) herausgezogen. Die Montagerichtung 102 ist entgegengesetzt zur Demontagerichtung 104 orientiert. Sowohl die Montagerichtung 102 als auch die Demontagerichtung 104 ist in der Fig. 4 exemplarisch parallel zur Höhenrichtung Y orientiert. Die Montage und die Demontage erfolgen werkzeuglos, d.h. nur von Hand, weil die motorspezifische Aufnahme 58-1 den zylindrischen E-Motor 94 im eingebauten Zustand formschlüssig aufnimmt, der in der Fig. 4 gezeigt ist.

Die motorspezifische Aufnahme 58-1 weist exemplarisch fünf Nasen 84-1 bis 84-5 auf. Die Nasen 84-1 und 84-2 sowie die Nasen 84-3 und 84-4 liegen sich paarweise in der Längsrichtung X gegenüber und greifen in der XY-Ebene formschlüssig an das zylindrische Gehäuse 96 des E-Motors 94 an. Die Nasen 84-1 und 84-4 sorgen dafür, dass der E-Motor 94 in der Längsrichtung X und in der Höhenrichtung Y formschlüssig gehalten wird. In der Höhenrichtung Y halten die Nasen 84-1 und 84-4 den E-Motor 94 zusätzlich kraftschlüssig in einer Klemmverbindung und verhindern so, dass der E-Motor 94 in der Längsrichtung Y aus der Aufnahme 58-1 herausfallen kann. Die Nasen 84-1 bis 84-4 sind elastisch nach außen beweglich, wie es durch Pfeile 106 angedeutet ist. Die Nasen 84-1 bis 84-4 erstrecken sich im Wesentlichen parallel zur Höhenrichtung Y. Die Nasen 84-1 bis 84-4 lassen sich jedoch während einer Demontage flexible nach außen bewegen, um den E-Motor 94 in der Höhenrichtung Y freizugeben. Seiten der Nasen 84-1 bis 84-4, die dem E-Motor 94 zugewandt sind, sind hinsichtlich ihrer Kontur an das Gehäuse 96 des E-Motors 94 formschlüssig angepasst.

Die Nasen 84-1 und 84-2 sind ferner so ausgebildet, dass sie den E-Motor 94 nicht nur in der Längsrichtung X, sondern auch in der Querrichtung Z halten. Sie haben in der Draufsicht einen L-förmigen Querschnitt. Die fünfte Nase 84-5, die einer Stirnseite 108 des E-Motors 94 direkt gegenüberliegend positioniert ist, kann starr, d.h. ohne Flexibilität, ausgebildet sein, da die Nase 84-5 lediglich eine Bewegung des E-Motors 94 in der negativen Z-Richtung verhindern muss. Die Nase 84-5 muss nicht nach außen biegbar sein. Die Nasen 84-1, 84-2 und 84-5 verhindern jedoch eine Beweglichkeit des E-Motors 94 in der Z-Richtung durch einen Formschluss.

Die Nasen 84-1 bis 84-5 sind einstückig mit dem Aufbauelement 46-1 ausgebildet und so positioniert, dass sie den E-Motor 84 formschlüssig aufnehmen und halten. Es versteht sich, dass zwischen den Nasen 84-1 bis 84-5 und dem E-Motor 94 in allen Richtungen ein gewisses Spiel vorhanden sein kann, da der E-Motor 94 nicht in einem Presssitz in der Aufnahme 58-1 sitzt.

Die anderen Funktionskomponenten 90, die in der Fig. 4 exemplarisch gezeigt sind, nämlich die Umlenkeinrichtung 92 sowie das (Laufrad-)Lager 62 sitzen formschlüssig auf bzw. in ihren komponentenspezifischen Aufnahmen 58-2 bzw. 58-3. Bei der Aufnahme 58-2 für das Zahnrad 98 der Umlenkeinrichtung 92 handelt es sich um eine stiftartige Nase 84-6. Bei der Aufnahme 58-3 für das Lager 62 handelt es sich um eine buchsenförmige, kreisförmige innen hohle Nase 84-7 ähnlich einem Sackloch, das zusätzlich mit einem stirnseitig vorgesehenen Ring (nicht gezeigt) gesichert werden kann, wobei der Ring z.B. mittels Schrauben, die in die Stirnseite der Aufnahme 58-3 ins Volle eingedreht werden, an der Aufnahme 58-3 befestigbar ist.. Sowohl das Zahnrad 98 der Umlenkeinrichtung 92 als auch das Lager 82 werden in der positiven Z-Richtung (Montagerichtung) auf bzw. in ihre komponentenspezifischen Nasen 84-6 bzw. 84-7 gesteckt. Die Nasen 84-6 und 84-7 weisen leicht überdimensionierte bzw. unterdimensionierte Durchmesser im Bereich ihrer Stirnseiten auf, die in die negative Z-Richtung gerichtet sind. Dies wird dadurch erreicht, dass die Materialstärke des Kunststoffs in diesen Bereichen entsprechend gewählt wird. Aufgrund seiner elastischen Verformbarkeit kann der Kunststoff beim Montieren des Zahnrades 98 und des Lagers 62 in radialer Richtung nachgeben und so den Weg zum Montieren der jeweiligen Funktionskomponenten 60 freigeben. Sobald dieser "Widerstand" überwunden ist, dehnt sich der Kunststoff wieder aus und hält die jeweilige Funktionskomponente 60 an ihrem jeweiligen vorherbestimmten Montageort (siehe Fig. 4). Die Durchmesser sind entsprechend dimensioniert.

Die Montage des E-Motors 94, des Zahnrads 98, der Umlenkeinrichtung 92 und des Lagers 62 erfolgt werkzeuglos, d.h. ohne zusätzliche Werkzeuge, per Hand durch Einschieben, Aufdrücken, Einpressen oder dergleichen. Die Funktionskomponenten 60 werden formschlüssig an ihren Bestimmungsorten gehalten. Die Funktionskomponenten 60 sind jedoch - wiederum werkzeuglos - gegen eine Federkraft der jeweiligen Nasen 84 demontierbar, die durch die elastische Verformbarkeit des Kunststoffs hervorgerufen wird. Dieses Wirkprinzip gilt für alle Verbindungen zwischen den Funktionskomponenten 60 der Figuren mit ihrem jeweiligen spezifischen Aufnahmen 58.

Die Aufnahmen 58 sind relativ zum Aufbau 38 so positionierbar, dass Funktionsgruppen (siehe z.B. die drei Zahnräder 98 in Fig. 4) richtig zueinander positioniert sind, um die Funktionstüchtigkeit zu gewährleisten.

Zur Montage werden keine weiteren Befestigungsmittel (z.B. Schrauben oder Ähnliches) benötigt. Es handelt sich in diesem Sinne um ein Stecksystem.

Der Aufbau 38 weist vorzugsweise zumindest eine erste Aufnahme 58 für den Antrieb 64, eine zweite Aufnahme 58 für die Steuereinheit (z.B. Steuerplatine) 80 sowie eine weitere Aufnahme 58 für das (Laufrad-)Lager 62 auf. Dies stellt die bevorzugte "Minimalausstattung" des Aufbaus 38 hinsichtlich der Aufnahmen 58 dar. Da der Aufbau 38 vorzugsweise mittels Spritzguss hergestellt wird, muss das Spritzguss-Werkzeug entsprechend geformt sein. Das Spritzguss-Werkzeug bzw. die Spritzgussform enthält also zumindest die oben genannten Aufnahmen 58 im Negativ. Ausgehend von dieser Minimalausführung des Aufbaus 38 lassen sich beliebige Förderfahrzeuge 30 konfektionieren. Sollte eines der Förderfahrzeuge 30 eine Funktionskomponente 60 aufweisen, die von den üblicherweise eingesetzten Funktionskomponenten 60 abweicht, kann dennoch (nachträglich) eine entsprechende komponentenspezifische Aufnahme am Aufbau 38 (z.B. mittels thermischen Schweißens) angebracht werden. Der "Standard" bzw. die "Minimalausstattung" hinsichtlich der Funktionskomponenten 60, die immer beim universellen Basisgestell 34 realisiert werden, kann variieren. Der Standard wird durch den Hersteller der Förderfahrzeuge 30 definiert. Der Standard ermöglicht es dem Hersteller der Förderfahrzeuge 30 jedoch, das Basisgestell kostengünstig durch ein einziges Kunststoffspritzgussteil zu realisieren, auch wenn das entsprechende Förderfahrzeug 30 nur in einer Kleinserie zum Einsatz kommt. Ob das Basisgestell 34 in einer Großserie oder Kleinserie zum Einsatz kommt, ist unerheblich, weil das Basisgestell 34 die formschlüssigen Aufnahmen 58 solcher Funktionskomponenten 60 bereits enthält, die immer benötigt werden.

Fig. 5 zeigt ein Blockdiagramm eines Baukastensystems 110. Das Baukastensystem 110 besteht aus dem (normierten) Basisgestell 34 sowie mindestens einem komponentenspezifischen Adapter 112. Der komponentenspezifische Adapter 112 ist sowohl an die entsprechende komponentenspezifische Aufnahme 58 als auch an die jeweilige Funktionskomponente 60 formschlüssig angepasst. Der Adapter 112 kommt immer dann zum Einsatz, wenn eine Funktionskomponente 60 eingesetzt wird, die von der ursprünglich geplanten Funktionskomponente 60 abweicht. Wenn in der Fig. 4 z.B. ein anderer E-Motor 94 eingesetzt wird, der z.B. ein kleineres Gehäuse 96 aufweist, so kann dieser kleinere E-Motor 94 nicht mehr formschlüssig in der Aufnahme 58-1 sitzen. In diesem Fall kann der Adapter 112 zusätzlich auf das Gehäuse 96 des kleineren E-Motors 94 aufgesteckt werden, um dann formschlüssig in die Aufnahme 58-1 zu passen. Es versteht sich, dass die "Standardaufnahmen" 58 deshalb vorzugsweise auf geometrisch größte Funktionskomponenten 60 geplant werden. Diese größenunabhängige Auslegung ermöglicht es einem Betreiber oder Anbieter der Förderfahrzeuge 30, Funktionskomponenten 60 von beliebigen Herstellern einzusetzen. Dennoch ist nur ein einziges Spritzgusswerkzeug nötig, um das Basisgestell 34 bzw. den Aufbau 38 herzustellen.

Bezugnehmend auf Fig. 6 ist die Spanneinrichtung 90 der Fig. 4 in einer anderen Perspektive gezeigt.

Fig. 6 zeigt die Aufnahme 58-2, auf der das Zahnrad 98 sitzt, um das Zugmittel 100 umzulenken und zu spannen. Die Aufnahme 58-2 weist ein Stützelement 120, einen Arm 122 und einen Stift bzw. Dorn 124 auf. Das Stützelement 120 erstreckt sich im Wesentlichen in der Querrichtung Z. Der Arm 122 erstreckt sich im Wesentlichen in der Höhenrichtung Y. Der Stift 124 erstreckt sich im Wesentlichen in der Querrichtung Z und stellt eine Drehachse 126 für das Zahnrad 98' dar. Ein Winkel α zwischen dem Arm 122 und dem Stützelement 120 ist so gewählt, dass das Zahn- bzw. Umlenkrad 98' das Zugmittel 100 in der XY-Ebene spannt. Auch hier wird wieder die elastische Eigenschaft des Kunststoffs ausgenutzt, so dass die Befestigung und die technische Funktion in den Aufbau 38 bzw. die Aufnahme 58-2 integriert sind.

Es versteht sich, dass die Einheit bestehend aus dem Stützelement 120, dem Arm 122 und dem Stift 124 selbst eine Funktionskomponente 60 darstellen kann, die in einer eigenen (hier nicht dargestellten) Aufnahme 58 im Aufbauelement 46-1 formschlüssig befestigt werden kann.

In der obenstehenden Beschreibung der Figuren hat man sich bei der Wahl der Orientierung des Koordinatensystems generell an die in der Intralogistik üblichen Bezeichnungen gehalten, so dass die Längsrichtung mit X, die Höhe mit Y und die Querrichtung mit Z bezeichnet sind.

Des Weiteren wurden gleiche Teile und Merkmale mit gleichen Bezugszeichen versehen. Die in der Beschreibung enthaltenen Offenbarungen sind sinngemäß auf ähnliche Teile und Merkmale mit ähnlichen Bezugszeichen übertragbar. Lage- und Orientierungsangaben (zum Beispiel "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

**Bezugszeichenliste**

| | | | |
|---|---|---|---|
| 10 | Lager/Kommissioniersystem | 64 | Antrieb(seinheit) |
| 11 | Teach-in-Platz | 66 | Sensor |
| 12 | Lager | 68 | Aktuator |
| 13 | Vereinzelungsstation (Depalettierer) | 70 | Lastaufnahmemittel (LAM) |
| 14 | Förderer | 72 | Hubwerk |
| 16 | Sorter | 74 | Mast |
| 18 | Kommissionierarbeitsplatz | 76 | Verkabelung |
| 20 | Packstation | 78 | Kommunikationseinheit |
| 22 | Arbeitsstation | 80 | Steuereinheit |
| 24 | Steuereinheit/Kommissioniersteuerung | 82 | Ausnehmung |
| 26 | Rechner/Recheneinheit | 84 | Nase |
| 27 | Eingangssignale | 86 | Verstärkung/Rippe |
| 28 | Ausgangssignale | 79 | Energiespeicher |
| 30 | Förderfahrzeug | 90 | Spanneinrichtung |
| 32 | (Kanal-)Shuttle | 92 | Umlenkeinrichtung |
| 34 | Basisgestell | 94 | E-Motor |
| 36 | Rahmen | 96 | zylindrisches Gehäuse von 94 |
| 38 | Aufbau | 98 | Zahnrad |
| 40 | Längsstrebe | 100 | Zugmittel (Zahnriemen) |
| 42 | Querstrebe | 102 | Montageeinrichtung |
| 44 | Kreuzstrebe | 104 | Demontageeinrichtung |
| 45 | Grundfläche | 106 | flexibel/elastisch beweglich |
| 46 | Aufbauelement | 108 | Stirnseite von 94 |
| 48 | Gehäuse | 110 | Baukastensystem |
| 50 | Laufräder | 112 | Adapter |
| 52 | Fahrtrichtung | 120 | Stütze |
| 54 | Achse | 122 | Arm |
| 56 | Abschnitte | 124 | Stift/Dorn |
| 58 | Aufnahme | 126 | Drehachse |
| 60 | (Funktions-)Komponente | | |
| 62 | (Laufrad-)Lager | | |

## Patentansprüche

1. Basisgestell (34), das universell für verschiedene, modular aufgebaute, Förderfahrzeuge (30), insbesondere für Shuttle (32), einsetzbar ist, wobei die Förderfahrzeuge (30) horizontal entlang einer Fahrtrichtung (52) in einem Lager- und Kommissioniersystem (10) verfahrbar sind, wobei das Basisgestell (34) einen tragenden Rahmen (36) und einen Aufbau (38) aufweist, der mit dem Rahmen (36) verbunden ist, **dadurch gekennzeichnet, dass** zumindest der Aufbau (38) ausschließlich aus Kunststoff hergestellt ist und wobei der Aufbau (38) eine Vielzahl von komponentenspezifischen Aufnahmen (58) aufweist, die einstückig mit dem Aufbau (58) ausgebildet sind und die eingerichtet sind, mindestens eine der folgenden Funktionskomponenten (60) des jeweiligen Förderfahrzeugs (30) formschlüssig in einer federnden Klemmverbindung zu halten: ein Lager (62); eine Antriebseinheit (64); einen Sensor (66); einen Aktuator (68); ein Lastaufnahmemittel (70); eine Kommunikationseinheit (78); eine Verkabelung (76) und eine elektrische Steuereinheit (80); wobei jede der Funktionskomponenten (60) entlang einer komponentenspezifischen Montagerichtung in oder auf die jeweilige komponentenspezifische Aufnahme (58) formschlüssig steckbar ist.

2. Basisgestell (34) nach Anspruch 1, **dadurch gekennzeichnet, dass** jede der Funktionskomponenten (60) in einer komponentenspezifischen Demontagerichtung, die entgegengesetzt zur Montagerichtung orientiert ist, kraftschlüssig durch die jeweilige komponentenspezifische federnde Aufnahme (58) fixierbar ist.

3. Basisgestell (34) nach Anspruch 1 oder 2, **dadurch gekennzeichnet, dass** der Rahmen (36) und der Aufbau (38) einstückig miteinander ausgebildet sind.

4. Basisgestell (34) nach einem der Ansprüche 1 bis 3, **dadurch gekennzeichnet, dass** der Aufbau (38) spritzgegossen und/oder laminiert ist.

5. Basisgestell (34) nach einem der Ansprüche 1 bis 4, **dadurch gekennzeichnet, dass** die Funktionskomponenten (60) werkzeuglos montierbar sind.

6. Basisgestell (34) nach einem der Ansprüche 1 bis 5, **dadurch gekennzeichnet, dass** jede der Aufnahmen (58) durch eine Ausnehmung im Aufbau (38) und/oder eine aus dem Aufbau (38) vorstehende Nase (84) implementiert ist.

7. Basisgestell (34) nach einem der Ansprüche 1 bis 6, **dadurch gekennzeichnet, dass** die komponentenspezifischen Aufnahmen (58) an aufeinander abgestimmten Orten des Aufbaus (38) angeordnet sind, um zusammenwirkende Komponentengruppen () zu bilden.

8. Basisgestell (34) nach einem der Ansprüche 1 bis 5, **dadurch gekennzeichnet, dass** das Basisgestell (34) ferner eine Aufnahme (58) für mindestens eine der folgenden Funktionskomponenten (60) aufweist: eine Laufradachse (54); ein Gehäuse (48); zusätzliche Verstärkungsrippen (86); ein Hubwerk (72); einen Energiespeicher (79); einen Mast (74) oder einen Mastfuß.

9. Basisgestell (34) nach einem der Ansprüche 1 bis 6, **dadurch gekennzeichnet, dass** der Kunststoff ein glasfaserverstärkter oder karbonfaserverstärkter Verbundstoff mit einer Kunststoff-Matrix ist.

10. Basisgestell (34) nach einem der Ansprüche 1 bis 7, **dadurch gekennzeichnet, dass** der Rahmen (36) und der Aufbau (38) jeweils eine rechteckig umlaufende, innen offene Grundfläche (45) aufweisen.

11. Basisgestell (34) nach einem der Ansprüche 1 bis 8, **dadurch gekennzeichnet, dass** der Aufbau (38) in mehrere Abschnitte (56) unterteilt ist, wobei ein erster Abschnitt (56-3) zur Aufnahme des Lastaufnahmemittels (70) eingerichtet ist und wobei ein oder mehrere zweite Abschnitte (56-1, 56-2) zur Aufnahme der restlichen Funktionskomponenten (60) eingerichtet ist bzw. sind.

12. Basisgestell (34) nach einem der Ansprüche 1 bis 9, **dadurch gekennzeichnet, dass** der Kunststoff im Bereich der Aufnahmen (58) verstärkt ist.

13. Baukastensystem (110) mit einem universellen Basisgestell (34) gemäß den vorgehenden Ansprüchen und mit mindestens einem komponentenspezifischen Adapter (112), wobei jeder der Adapter (112) geometrisch an eine der komponentenspezifischen Aufnahmen (58) sowie an die jeweilige Funktionskomponente (60) formschlüssig angepasst ist.

14. Förderfahrzeug (30), insbesondere ein Shuttle (32), mit einem Basisgestell (34) gemäß einem der Ansprüche 1 bis 12 und mit: mehreren Laufrädern (50) und Laufradlagern (62); einer Antriebseinheit (64); mindestens einem Sensor (66); einer Verkabelung (68) und einer elektrische Steuereinheit (80).

## Claims

1. A base frame (34), which can be used universally for different modularly-structured conveying vehicles (30), in particular for shuttles (32), wherein the conveying vehicle (30) can travel horizontally along a travelling direction (52) in a storage and picking system (10), wherein the base frame (34) comprises a supporting frame (34) and a structure (38) connected to the frame (36), **characterized in that** at least the structure (38) is made of plastic only, and wherein the structure (38) comprise a plurality of component-specific receiving elements (58) which are formed integrally with the structure (58) and which are configured to hold at least one of the following functional components (60) of the respective conveying vehicle (30) in a positive manner: a bearing (62); a drive unit (64); a sensor (66); an actuator (68); a load-handling device (70); a communication unit (78); a cabling (76); and an electric control unit (80); wherein each of the functional components (60) is insertable positively along a component-specific mounting direction in or on the respective component-specific receiving element (58).

2. The base frame (34) of claim 1 **characterized in that** each of the functional components (60) is fixable in a component-specific demounting direction, which is orientated oppositely to the mounting direction, in a frictional connected manner by the respective component-specific resilient receiving element (58).

3. The base frame (34) of claim 1 or 2 **characterized in that** the frame (36) and the structure (38) are formed integrally with each other.

4. The base frame (34) of any of claims 1 to 3 **characterized in that** the structure (38) is injection molded and/or laminated.

5. The base frame (34) of any of claims 1 to 4, **characterized in that** the functional components (60) are countable without tools.

6. The base frame (34) of any of claims 1 to 5 **characterized in that** each of the receiving elements (58) is implemented by a recess in the structure (38) and/or a nose (84) projecting from the structure (38).

7. The base frame (34) of any of claims 1 to 6 **characterized in that** the component-specific receiving element (58) is arranged at locations of the structure (38) which are adapted to each other in order to form cooperating component groups.

8. The base frame (34) of any of claims 1 to 5 **characterized in that** the base frame (34) further comprises a receiving element (58) for at least one of the following functional components (60): a travelling wheel axis (54); a housing (48); additional reinforcement ribs (86); a hoisting device (72); an energy storage (79); a mast (74); or a mast foot.

9. The base frame (34) of any of claims 1 to 6 **characterized in that** the plastic is a glass-fiber reinforced, or carbon-fiber reinforced, composite having a plastic matrix.

10. The base frame (34) of any of claims 1 to 7 **characterized in that** the frame (36) and the structure (38) respectively comprise a rectangular circulating base area (45) which is open internally.

11. The base frame (34) of any of claims 1 to 8 **characterized in that** the structure (38) is divided into several sections (56), wherein a first section (56-3) is configured for receiving the load-handling device (70), and wherein one or more second sections (56-1, 56-2) is/are configured for receiving remaining functional components (60).

12. The base frame (34) of any of claims 1 to 9 **characterized in that** the plastic is reinforced in the region of the receiving elements (58).

13. A modular system (110) having a universal base frame (34) in accordance with the preceding claims and having at least one component-specific adaptor (112), wherein each of the adapters (112) is geometrically adapted to one of the component-specific receiving elements (58) as well as to the respective functional components (60).

14. Conveying vehicle (30), in particular a shuttle (32), having a base frame (34) in accordance with any of claims 1 to 12 and comprising: several travelling wheels (50) and travelling wheel bearings (62); a drive unit (64); at least one sensor (66); a cabling (68); and an electric control unit (80).

## Revendications

1. Bâti de base (34) utilisable universellement par différents véhicules de transport (30) à structure modulaire, en particulier par des navettes (32),
les véhicules de transport (30) pouvant être déplacés horizontalement le long d'une direction de déplacement (52) dans un système (10) d'entreposage et de colisage,
le bâti de base (34) présentant un cadre porteur (36) et une superstructure (38) reliée au cadre (36),
**caractérisé en ce que**
au moins la superstructure (38) est réalisée exclusivement en matière synthétique, **en ce que** la structure (38) présente plusieurs logements (58) pour des composants spécifiques, ces logements étant formés d'un seul tenant avec la superstructure (58) et étant conçus pour maintenir en correspondance géométrique dans une liaison par serrage élastique au moins l'un des composants fonctionnels (60) suivants du véhicule de transport (30) concerné: un support (62), une unité d'entraînement (64), un capteur (66), un actionneur (68), un moyen (70) de reprise de charge, une unité de communication (78), un câblage (76) et une unité électrique de commande (80) et
**en ce que** chacun des composants fonctionnels (60) peut être enfiché en correspondance géométrique dans une direction de montage spécifique au composant dans ou sur le logement (58) spécifique au composant particulier.

2. Bâti de base (34) selon la revendication 1, **caractérisé en ce que** chacun des composants fonctionnels (60) peut être fixé en correspondance mécanique par le logement élastique (58) spécifique au composant particulier dans une direction de démontage spécifique au composant et opposée à la direction de montage.

3. Bâti de base (34) selon les revendications 1 ou 2, **caractérisé en ce que** les cadres (36) et la superstructure (38) sont formés l'un avec l'autre d'un seul tenant.

4. Bâti de base (34) selon l'une des revendications 1 à 3, **caractérisé en ce que** la superstructure (38) est moulée par injection et/ou stratifiée.

5. Bâti de base (34) selon l'une des revendications 1 à 4, **caractérisé en ce que** les composants fonctionnels (60) peuvent être montés sans recourir à un outil.

6. Bâti de base (34) selon l'une des revendications 1 à 5, **caractérisé en ce que** chacun des logements (58) est réalisé sous la forme d'un logement prévu dans la superstructure (38) et/ou d'un bec (84) qui déborde de la superstructure (38).

7. Bâti de base (34) selon l'une des revendications 1 à 6, **caractérisé en ce que** les logements (58) spécifiques à des composants sont disposés en des emplacements de la superstructure (38) accordés les uns aux autres, de manière à former des groupes () de composants qui coopèrent.

8. Bâti de base (34) selon l'une des revendications 1 à 5, **caractérisé en ce que** le bâti de base (34) présente en outre un logement (58) pour au moins l'un des composants fonctionnels suivants (60) : un axe (54) de roue de déplacement, un boîtier (48), des nervures supplémentaires de renfort (86), un mécanisme de levage (72), un accumulateur d'énergie (79), un mât (74) ou un pied de mât.

9. Bâti de base (34) selon l'une des revendications 1 à 6, **caractérisé en ce que** la matière synthétique est formée d'un matériau composite renforcé de fibres de verre ou renforcé de fibres de carbone et présentant une matrice en matière synthétique.

10. Bâti de base (34) selon l'une des revendications 1 à 7, **caractérisé en ce que** le cadre (36) et la superstructure (38) présentent l'un et l'autre une surface de base (45) rectangulaire périphérique ouverte à l'intérieur.

11. Bâti de base (34) selon l'une des revendications 1 à 8, **caractérisé en ce que** la superstructure (38) est divisée en plusieurs sections (56), une première section (56-3) étant conçue pour reprendre le moyen (70) de reprise de charge et une ou plusieurs deuxièmes sections (56-1, 56-2) étant prévues pour reprendre le reste des composants fonctionnels (60).

12. Bâti de base (34) selon l'une des revendications 1 à 9, **caractérisé en ce que** la matière synthétique est renforcée au niveau des logements (58).

13. Système (110) d'étagère présentant un bâti de base universel (34) selon l'une des revendications précédentes et au moins un adaptateur (112) spécifique à des composants, chacun des adaptateurs (112) étant adapté géométriquement, en correspondance géométrique, à l'un des logements (58) spécifiques à un composant ainsi qu'aux différents composants fonctionnels (60).

14. Véhicule de transport (30), en particulier navette (32), présentant un bâti de base (34) selon l'une des revendications 1 à 12 et plusieurs roues de déplacement (50) et paliers (62) de déplacement, une unité d'entraînement (64), au moins un capteur (66), un câblage (68) et une unité électrique de commande (80).
